Europäisches Patentamt

European Patent Office

Office européen des brevets

(19)

(11) **EP 1 262 970 A1**

(12) **EUROPEAN PATENT APPLICATION**

(43) Date of publication:
**04.12.2002 Bulletin 2002/49**

(51) Int Cl.[7]: **G11B 20/10**

(21) Application number: **01830358.6**

(22) Date of filing: **31.05.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **STMicroelectronics S.r.l.**
**20041 Agrate Brianza (Milano) (IT)**

(72) Inventors:
• **Dati, Angelo**
**55049 Viareggio (Lucca) (IT)**

• **Tonci, Cecilia**
**20100 Milano (IT)**
• **Gaducci, Paolo**
**17100 Savona (IT)**

(74) Representative: **Botti, Mario**
**Botti & Ferrari S.r.l.,**
**Via Locatelli, 5**
**20124 Milano (IT)**

(54) **Method for optimising a PRML data receiving channel for data storage systems**

(57)     This invention relates to a method of optimising a PRML (Partial Response Maximum Likelihood) receiving channel (2) for mass memory data receiving systems comprising an input receiving channel (2), a receiver (3) placed downstream of the channel (2), a detector (4) connected in cascade to the receiver (3), and a summing node (11) being input both the receiver output ($p(D)$) through a delay line (10), and the output from the detector (4) through an impulsive filter (12), which method is characterised by:

- performing an indirect estimate of the noise strength $p(D)$ by filtering out the error sequence ($e(D)$), i.e. the output signal from the summing node (11), through a filter (21); and

- selecting either the output from the summing node (11) or the output from the filter (21) to obtain an optimisation parameter (ACCout) for feedback to the receiving system.

FIG. 4

EP 1 262 970 A1

## Description

The present invention relates to a method of optimising a PRML (Partial Response Maximum Likelihood) data receiving channel, for mass memory data storage systems.

The invention relates, particularly but not exclusively, to a method of optimising the performance of a data receiving system comprising an input receiving channel, a receiver placed downstream of the channel, and a detector connected in cascade to the receiver.

The invention further relates to a data receiving system comprising an input receiving channel, a receiver placed downstream of the channel, and a detector connected in cascade to the receiver.

Background Art

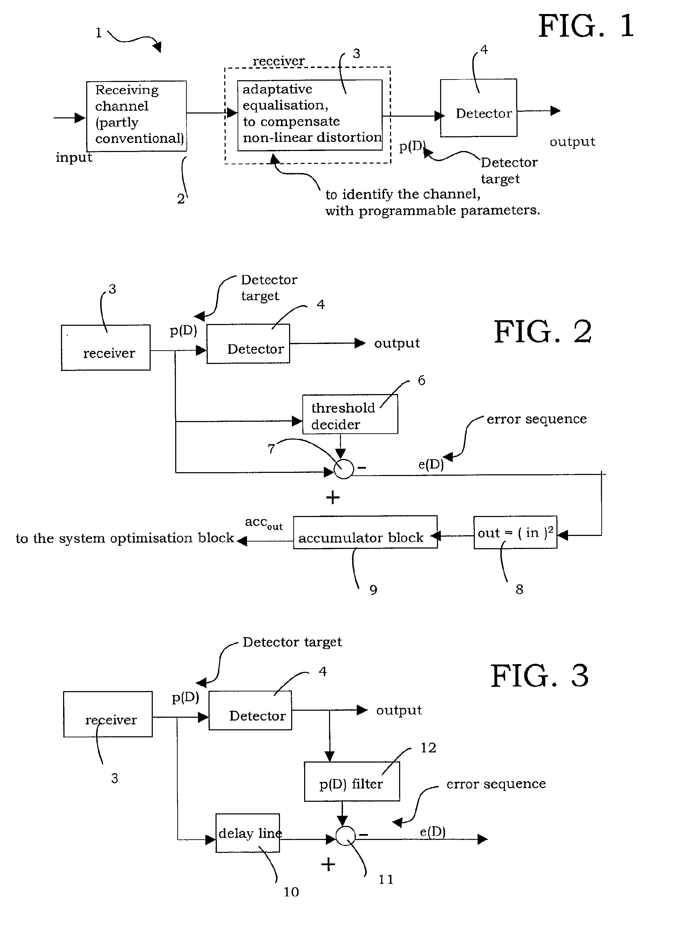

Briefly, the invention relates to a method of indirectly measuring and optimising the performance of a data receiving system, such as the system schematically shown in Figure 1 of the drawings.

Systems of this kind require that a step of optimising a PRML receiving channel be carried out automatically in order to have the receiving system equalised. To achieve this aim, a reference value representing the channel quality is necessary, which value is usually found by measuring either a bit error rate or a byte error rate.

Unfortunately, this measurement is often difficult to obtain at the calibration stage, and accordingly, measuring the reference value directly can hardly represent a workable basis for a method of automatically optimising the system equalisation parameters.

Figure 1 shows a view in schematic block form of a data receiving system 1 that comprises a partly conventional receiving channel 2, a receiver 3 connected downstream of the channel 2, and a detector 4 connected in cascade to the receiver 3.

The input signal to the system 1 is directly applied to one end of the channel 2, while the output signal is provided at the output 5 of the detector 4. The receiver 3 is to identify the channel 2 by an equalisation operation, which is adaptative to programmable parameters and compensates for non-linear distortion.

A prior technique commonly used provides for an estimate of the noise strength $p(D)$ on the signal to be performed at the output of the receiver 3 of the system 1, i.e. at the input of the detector 4.

In a condition of optimum performance, this estimate accounts just for the input noise to the channel 2, and can only be increased by a less-than-optimum calibration of the signal conditioning system. This prior technique combines simplicity with the practical character of an extremely direct circuit approach, since the received signal can be estimated, as needed to provide an estimate of the noise, by a simple threshold decision, as schematically shown in Figure 2.

Figure 2 schematically shows that the output from the receiver 3 branches off at the input to a threshold decider 6 as well as to a summing node 7 that also receives the inverted-sign output from the threshold decider 6. The result of the sum operation performed at the node 7 is an error sequence $e(D)$, which is applied to a cascade of a multiplier block 8 and an accumulator block 9 to give a value *ACCout* for use as an optimisation parameter in the receiving system 1.

Although the value provided by this technique does lie within the optimum range of the parameters, it is wholly ineffective for the purpose of the system final optimisation because, in general, it is not adequately correlated with the error rate.

A second prior approach, also commonly used and being an improvement on the above method, consists of analysing certain metric measurements accumulated in a Viterbi detector. These metric measurements are representative of the estimate of the noise strength that associates with the sequence decoded by the detector 4 in the system 1.

The use of metric measurements is also beneficial on many counts, such as the fact that they are computed already during normal operation of the detector 4. However, metric measurements generally cannot be used directly in systems led to the limits of the technological process possibilities, i.e. in systems having a high integration density, without affecting the system speed.

Furthermore, with standard techniques for normalising the detector metric measurements, the measure value of noise strength associated with the decoded sequence is only indirectly available.

To obtain an indirect estimate of noise strength, the technique schematically shown in Figure 3, and described here below, could be used.

The output of the receiver 3 is branched off to a delay line 10, and through the latter, to a summing node 11. The node 11 also receives the inverted-sign output from a filter 12 having an impulsive response $p(D)$. The filter 12 is input the branched output from the detector 4.

The result of the sum determined in the summing node 11 is an error sequence $e(D)$, which is analysed in the same manner as in the prior art embodiment previously discussed in relation to Figure 2.

The prior approach last described has a drawback of its own in that it requires an additional logic. The blocks to be added are here the filter 12 with impulsive response $p(D)$, for reconstructing the input signal to the detector 4, and the delay line 10 for compensating the latency of detector 4.

In addition, the state-of-art measuring methods discussed hereinabove, although in many ways advantageous, are not quite successful in providing an accurate estimate of the quality of the data receiving channel for the purpose of optimising the receiving system performance.

The underlying technical problem of this invention is to provide a novel method of assessing the performance of a receiving system, which method is appropriate to allow optimisation of the PRML (Partial Response Maximum Likelihood) receiving channel and is particularly useful with mass memory data storage systems.

Summary of the Invention

The principle on which this invention stands is to effect a selection on the error sequence to be used in order to obtain the optimisation parameter of the system. In some situations, the output error sequence from the summing node is used, while in other situations a suitably filtered error sequence is selected.

Based on this principle, the technical problem is solved by a method as previously indicated, and as defined in the characterising part of Claim 1.

The invention also relates to a data receiving system as defined in Claim 3.

The features and advantages of the method and the system according to the invention will be apparent from the following description of embodiments thereof, given by way of non-limiting examples with reference to the accompanying drawings.

In the drawings:

Brief Description of the Drawings

- Figure 1 schematically shows a view of a data receiving system performed according to the prior art.

- Figure 2 schematically shows a view of a portion of the receiving system of Figure 1, which incorporates functional blocks adapted to determine optimisation parameters of the receiving system.

- Figure 3 schematically shows a view of a second embodiment of the functional portion of Figure 2, according to a second prior optimisation technique.

Figure 4 schematically shows a data receiving system that incorporates an optimisation functional portion in accordance with the method of this invention.

- Figures 5 and 6 show comparative graphs of the optimisation parameters as respectively obtained with conventional systems and with the system of this invention, for a given input value.

- Figures 7 and 8 show comparative graphs of the optimisation parameters as respectively obtained with conventional systems and with the system of this invention, for another given input value.

Detailed Description

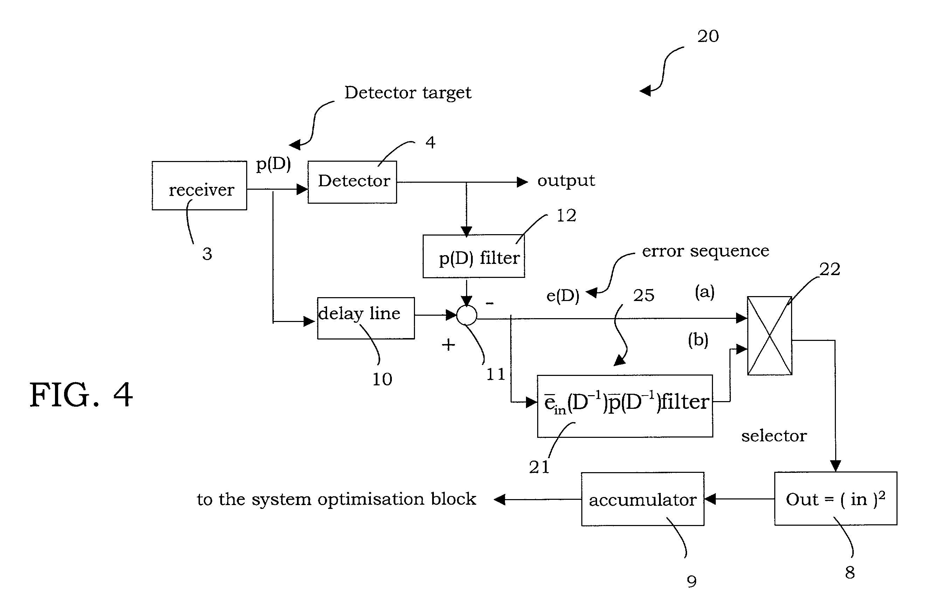

With reference to the drawings, in particular to the embodiment shown in Figure 4, a data receiving system is generally and schematically shown at 20, which system embodies this invention and incorporates a functional portion 25 for its optimisation.

The same reference numerals will be used throughout to denote some particulars and parts function-wise equivalent to those of the conventional receiving system structure 1 previously described in relation to Figure 1.

The data receiving system 20 also comprises a receiving channel 2 and a receiver 3 connected downstream of the channel 2; a detector 4 being conventionally connected in cascade to the receiver 3.

The input signal is applied directly to one end of the channel 2, and the output signal is obtained from the output 5 of the detector 4.

The output of the receiver 3 is recognised as an estimate of strength of the signal noise at the detector 4 input.

The output of the receiver 3 branches off to the input of a delay line 10, whose output is applied to a summing node 11.

The output of the detector 4 branches off to a functional block 12, which block comprises an impulsive response filter $p(D)$ for reconstructing the output sequence from the receiver once the channel noise is filtered out.

The output from this block 12 is applied to the summing node 11, but with its sign inverted, such that a subtract operation is essentially performed in the node 11 of the receiver output, through the delay line 10, and the output from the detector 4, through the filter 12.

Advantageously in this invention, the output error sequence $e(D)$ from the summing node 11 is routed along two separate paths: a first path that is applied directly to one input ($a$) of a selector 22, and a second path that includes a filter 21 whose output is applied to another input ($b$) of the selector 22.

The output from the selector 22 is applied to a cascade of a squaring block 8 and an accumulator block 9.

The squaring block essentially raises the received signal to a power of two. In other words, the output OUT from the block 8 equals the square $(IN)^2$ of the input signal IN.

Downstream of the squaring block 8, the accumulator block 9 provides a value *ACCout*, which is used as an optimisation parameter for the receiving system 20 and is fed back to the system.

An estimate of the output *ACCout* from the accumulator 9 may be given as,

$$ACCout \cong \|e\|^2 = \|x + n - x\|^2 = \|err + n\|^2$$

where $x$ is the emitted signal sequence, $n$ is the input noise to the detector 4, and $x\backslash$ is an estimate of the signal sequence reconstructed by the detector.

The expression $err = x - x\backslash$ indicates the error in the emitted sequence.

Proceeding from the above relation, and assuming the noise $n$ to be on the average nil, it is,

$$\|err + n\|^2 = \|err\|^2 + \|n\|^2$$

which brings out that the term tied to $err$ is proportional to the error rate.

The invention is aimed at improving the contribution of this term, which, being consistent with the equalisation aim at the detector input, can also be written as,

$$err(D) = p(D)e_{in}(D)$$

The method of this invention is based on an estimate of the following quantity:

$$\bar{p}\,(D^{-1})\bar{e}_{in}\,(D^{-1})err(D) = \bar{p}\,(D^{-1})p(D)\bar{e}_{in}(D^{-1})\bar{e}_{in}(D)$$

which requires *ACCout* to be estimated as follows:

$$ACCout = \left\|\bar{p}\otimes\bar{e}_{in}\otimes err\right\|^2 + \left\|\bar{p}\otimes\bar{e}_{in}\otimes n\right\|^2$$

If $\overline{p(D)}$ and $\underline{p(D)}$ are the same expression, and the estimate of the error type $\bar{e}_{in}$ is actually coincident with the error $e_{in}$ due to the detector 4, then the estimate of the accumulator 9 will be based on the output of the filter matched to 21 to the error $err(D)$, which in the event of blank noise ensures the highest ratio for the quantity:

$$\frac{\left\|\bar{p}\otimes\bar{e}_{in}\otimes err\right\|^2}{\left\|\bar{p}\otimes\bar{e}_{in}\otimes n\right\|^2}$$

The modification made to the receiving system 1 of Figure 3 is that discussed in relation to Figure 4, wherein the same measuring capability as in the conventional system shown in Figure 3 is retained, but with the important difference that the inputs ($a$) and ($b$) to the squaring block can now be selected. The possibility to vary the polynomial $\overline{p(D)}$ of the impulsive response on the error from the filter 21 with respect to the estimate $p(D)$, being the target for the detector 4, has been introduced to account for that the noise is generally correlated.

The optimisation method of this invention has important practical effects when applied to optimising the boost of an anti-aliasing low-pass filter used in the equalisation chain of the signal of a read/write channel for mass memories, e.g. a hard disk drive.

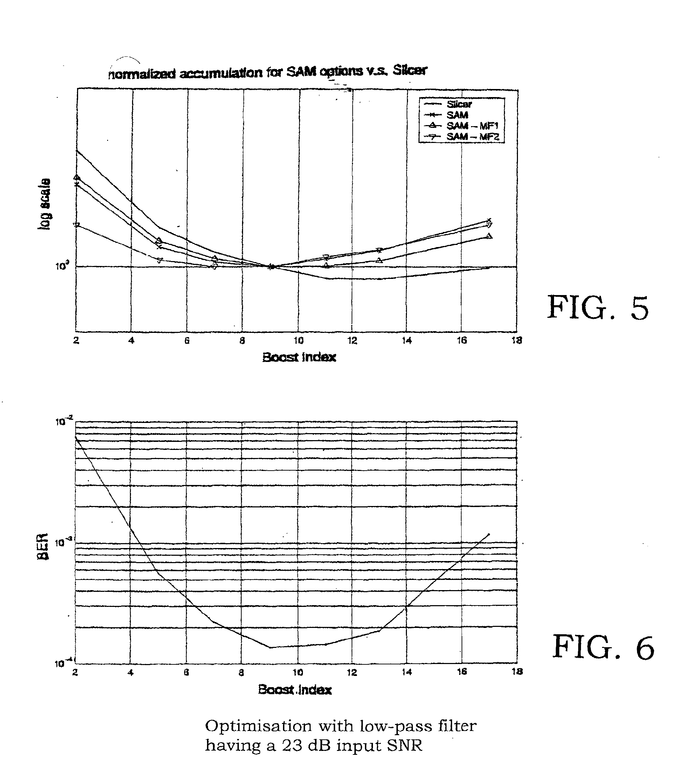

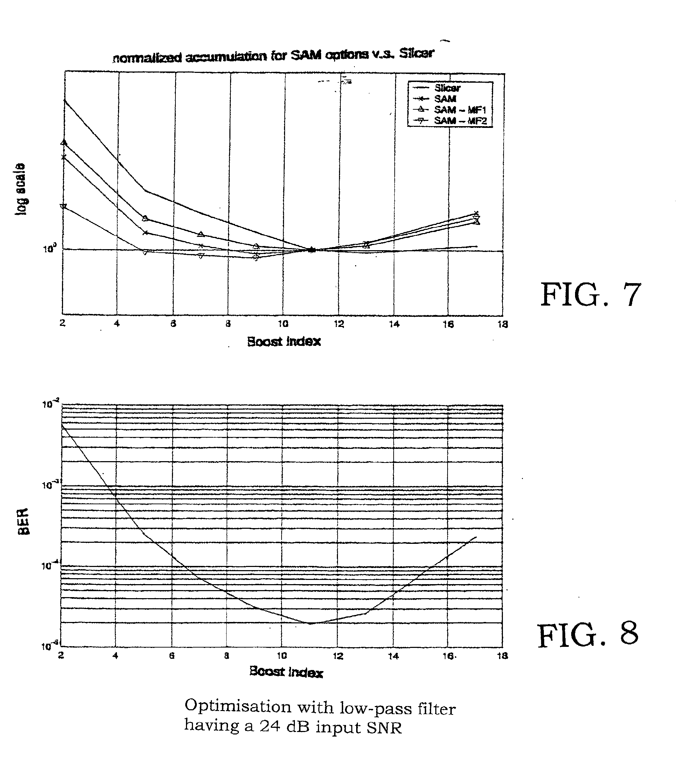

Shown in Figures 5 and 6 are comparative graphs of conventional solutions and the solution of this invention.

More particularly, graph 5 is a comparative log scale plot of boosts for conventional systems and the inventive system. The graph of Figure 6 is a BER (Byte Error Rate) scale plot of boost for a low-pass filter having a 23 dB input SNR.

The reference word "slicer" used in the graphs denotes the results of the conventional optimisation technique shown in Figure 2. A reference "SAM" denotes instead the results of the inventive optimisation, which is based on an examination of the detector metrics or, equivalently, an evaluation for selecting the input ($a$) of the selector 22.

The reference numerals SAM_MF1 and SAM_MF2 denote the measured values for selecting the input ($b$) of the inventive system, as obtained with two different filters $\overline{e(D)}$.

It matters to observe that the estimate SAM_MF1 is always minimal at the value that optimises the error rate and at a high SNR. The value SAM_MF2 provides instead the right result only at lower SNRs. Notice that the system built around the threshold decider of Figure 2 can only recognise a range of optimum values. It can be safely concluded that a reliable indication of the error rate can be obtained but with the system of this invention.

An application of the method and the system according to this invention to a PRML channel will now be described in detail.

The method of indirectly measuring the performance of the PRML channel and, accordingly, optimising the parameters of the data receiving system, according to this invention, allows a calibration of the read/write system parameters for a data storage system of the hard disk drive type to be performed more quickly at the first disk initialisation stage.

In a hard disk drive type of mass memory system, an analog signal is returned with characteristics that vary with the manufacturing tolerances of the magnetic medium, the read/write head, design peculiarities of the electronic circuitry in individual constructions, and unavoidable process spread.

Currently manufactured hard disks are applied a "zoning" technique, whereby a hard disk is divided into zones to be differently written in, so as to increase the density of the recorded information in the magnetic medium. However, this technique involves a number of calibration steps for a single surface. Assuming, as an example, three zones per surface and a plain disk with one plate, 3x2=6 separate calibrations of the hard disk drive would be necessary.

The parameters to which the signal is tied, moreover, interlink in a manner that cannot be expressed by any functional relation, and the parameter of primary interest to the user, i.e. error rate, is the more laborious parameter to have measured.

Thus, it could be supposed to apply an exhaustive scanning of the whole set of the possible hard disk system configurations on each unit produced by the hard disk drive manufacturer, until the optimum setup for each zone of each surface is found.

To save time in testing and optimising each drive, the manufacturer takes a short cut that presupposes an estimate of a correlated quantity with the error rate, and that allows an indirect estimate to be obtained.

Such stratagems, discussed in connection with the prior art, result in the testing time being dramatically reduced - since it could be thought of validating the optimum setup by reading a few tens of sectors, rather than the several thousands that are needed for a reliably estimated error rate.

Without the method of this invention, however, indirect estimates are only partially successful because, as illustrated by the system of Figure 4, the estimates bear no proven relation to the error rate. On the other hand, the straightforward processing described hereinabove allows a reliable and quick optimisation to be achieved at once with an implementing effort that is only a fraction of that required for implementing the detector alone.

To summarise, the method of this invention is advantageous over prior solutions, in that it allows the system BER to be minimised within a much shorter time than by a direct measurement of the byte error rate.

All the complexity that is added to the system circuit-wise amounts to providing one or more filters adapted to the most likely system errors. The method is not invasive of the detector structure and leaves speed performance unaffected.

Thus, the invention provides a reliable method of optimising the data receiving system parameters, especially in PRML channel read/write applications for hard disk drives, using matched filters to the estimated output noise from the signal processing system.

## Claims

1.  A method of optimising a PRML (Partial Response Maximum Likelihood) receiving channel (2) for mass memory data receiving systems comprising an input receiving channel (2), a receiver (3) placed downstream of the channel (2), a detector (4) connected in cascade to the receiver (3), and a summing node (11) being input both the receiver output $(p(D))$ through a delay line (10), and the output from the detector (4) through an impulsive filter (12), the method being **characterised by**:

    - performing an indirect estimate of the noise strength $p(D)$ by filtering out the error sequence $(e(D))$, i.e. the output signal from said summing node (11), through a filter (21); and

    - selecting either the output from the summing node (11) or the output from said filter (21) to obtain an optimisation parameter (ACCout) for feedback to the receiving system.

2.  A method according to Claim 1, **characterised in that** the selecting step is carried out in a selector (22) connected in downstream of both the node (11) and the filter (21).

3.  A data receiving system (20), comprising an input receiving channel (2), a receiver (3) placed downstream of the channel (2), a detector (4) connected in cascade to the receiver (3), and a summing node (11) being input both the receiver output $(p(D))$ through a delay line (10), and the output from the detector (4) through an impulsive filter (12), **characterised in that** it further comprises a selector (22) receiving, on a first input $(a)$, the output from said summing node (11), and on a second input $(b)$, the same output from the summing node (11) through a filter (21).

4.  A data receiving system according to Claim 3, **characterised in that** said selector (22) has an output connected to a cascade of a squaring block (8) and an accumulator block (9).

5.  A data receiving system according to Claim 4, **characterised in that** said squaring block (8) effects a squaring of the input signal.

6.  A data receiving system according to Claim 4, **characterised in that** said accumulator block (9) outputs a parameter value (*ACCout*) for use in optimising the receiving system.

# FIG. 1

1

receiver 3

| Receiving channel (partly conventional) |
| --- |

input

2

| adaptative equalisation, to compensate non-linear distortion |
| --- |

p(D)

4

| Detector |
| --- |

output

Detector target

to identify the channel, with programmable parameters.

# FIG. 2

3

Detector target

4

| receiver | p(D) | | Detector |
| --- | --- | --- | --- |

output

6

| threshold decider |
| --- |

7

−

e(D)

error sequence

+

acc$_{out}$

| accumulator block |
| --- |

| out = ( in )$^2$ |
| --- |

to the system optimisation block

9

8

# FIG. 3

Detector target

4

| receiver | p(D) | | Detector |
| --- | --- | --- | --- |

output

3

12

| p(D) filter |
| --- |

error sequence

| delay line |
| --- |

−

e(D)

+

10

11

EP 1 262 970 A1

## FIG. 4

**Detector target**

20

receiver → $p(D)$ → Detector (4) → output

3

Detector → $p(D)$ filter (12)

receiver → delay line (10) → + ⊖ − → $e(D)$  **error sequence**

11

25 (a)

(b)

22

$\overline{e}_{in}(D^{-1})\overline{p}(D^{-1})$ filter (21)

selector

to the system optimisation block ← accumulator (9) ← Out = ( in )² (8)

FIG. 5

FIG. 6

Optimisation with low-pass filter
having a 23 dB input SNR

**FIG. 7**

**FIG. 8**

Optimisation with low-pass filter
having a 24 dB input SNR

European Patent
Office

**EUROPEAN SEARCH REPORT**

Application Number

EP 01 83 0358

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 583 705 A (CHE XIAODONG ET AL) 10 December 1996 (1996-12-10) * abstract; figures 8,9 * * column 10, line 15 - column 13, line 45 * | 1,3-5 | G11B20/10 |
| A | US 5 490 091 A (KOGAN ANDREW ET AL) 6 February 1996 (1996-02-06) * abstract; figures 3,4 * * column 6, line 35 - column 7, line 11 * * column 8, line 35 - line 59 * | 1,3 | |
| A | US 5 987 634 A (BEHRENS RICHARD T ET AL) 16 November 1999 (1999-11-16) * abstract; figures 4,7 * * column 5, line 1 - column 6, line 31 * * column 10, line 17 - line 62 * | 1,3,4 | |
| A | EP 0 994 597 A (LUCENT TECHNOLOGIES INC) 19 April 2000 (2000-04-19) * the whole document * | 1,3 | |

**TECHNICAL FIELDS SEARCHED** (Int.Cl.7)

G11B

The present search report has been drawn up for all claims

| Place of search | Date of completion of the search | Examiner |
|---|---|---|
| THE HAGUE | 28 December 2001 | Schiwy-Rausch, G |

EPO FORM 1503 03.82 (P04C01)

**ANNEX TO THE EUROPEAN SEARCH REPORT
ON EUROPEAN PATENT APPLICATION NO.**                    EP 01 83 0358

This annex lists the patent family members relating to the patent documents cited in the above-mentioned European search report.
The members are as contained in the European Patent Office EDP file on
The European Patent Office is in no way liable for these particulars which are merely given for the purpose of information.

28-12-2001

| Patent document cited in search report | | Publication date | Patent family member(s) | | Publication date |
|---|---|---|---|---|---|
| US 5583705 | A | 10-12-1996 | US<br>EP<br>JP | 5493454 A<br>0706173 A1<br>8115503 A | 20-02-1996<br>10-04-1996<br>07-05-1996 |
| US 5490091 | A | 06-02-1996 | NONE | | |
| US 5987634 | A | 16-11-1999 | US | 5754353 A | 19-05-1998 |
| EP 0994597 | A | 19-04-2000 | EP | 0994597 A1 | 19-04-2000 |

EPO FORM P0459

For more details about this annex : see Official Journal of the European Patent Office, No. 12/82